# EUROPÄISCHE PATENTSCHRIFT

(11) **EP 0 983 899 B1**
(45) Veröffentlichungstag und Bekanntmachung des Hinweises auf die Patenterteilung: **26.11.2003**
(21) Anmeldenummer: 99117226.3
(22) Anmeldetag: 01.09.1999
(51) Int. Cl.: B60P 1/54

(54) **Ladevorrichtung zum Be- und Entladen eines Fahrzeuges**
Loading device for loading and unloading of a vehicle
Dispositif de chargement pour le chargement et le déchargement d'un véhicule

(30) Priorität: 01.09.1998 DE 29815729 U
(43) Veröffentlichungstag der Anmeldung: 08.03.2000
(73) Patentinhaber: Guggenmos Karosserie-und Fahrzeugbau Vertriebsgesellschaft mbH, 86453 Dasing (DE)
(72) Erfinder: Jennissen, Franz-Peter, 86316 Friedberg-Stätzling (DE)
(74) Vertreter: Schurack, Eduard F.

(56) Entgegenhaltungen:
- DE-A- 4 216 709
- DE-U- 1 943 384
- GB-A- 1 289 604
- GB-A- 2 268 729
- US-A- 2 772 794
- PATENT ABSTRACTS OF JAPAN vol. 007, no. 126 (M-219), 31. Mai 1983 (1983-05-31) & JP 58 043831 A (REISEN OOTA), 14. März 1983 (1983-03-14)

## Beschreibung

Die Erfindung betrifft eine in ein Fahrzeug einbaubare Ladevorrichtung zum Be- und Entladen eines Fahrzeugs sowie ein Fahrzeug mit einer derartigen Ladevorrichtung. Eine Ladevorrichtung mit den Merkmalen des Oberbegriffs des Patentanspruchs 1. ist bekannt aus der GB-A-2 268 729.

Ladevorrichtungen werden beispielsweise im Zusammenhang mit Getränketransportfahrzeugen eingesetzt. Hierbei werden gewöhnlich beim Getränkehersteller in dessen Lager oder in einem Zwischenlager Getränkekästen oder -fässer mittels eines Gabelstaplers auf die Ladefläche eines Transportfahrzeugs geladen, von wo sie anschließend beim Kunden wieder heruntergeholt werden müssen. Da beim Kunden gewöhnlich kein Gabelstapler vorhanden ist, muß diese Tätigkeit üblicherweise von einer Bedienperson ausgeführt werden, d. h. die Bedienperson klettert auf die Ladefläche, schiebt die zu entladenden Getränkekästen an die Kante der Ladefläche, steigt von der Ladefläche herunter und hebt die Getränkekästen von der Ladefläche auf den Boden bzw. auf einen Rollwagen, um sie von dort an den Bestimmungsort zu transportieren.

Infolge des beträchtlichen Gewichts der Getränkekästen treten beim Bedienpersonal im Laufe der Berufstätigkeit häufig Verschleißerscheinungen an den Gelenken, Bandscheiben, etc. auf. Um dies zu vermeiden, sind im Stand der Technik verschiedene Lösungswege beschritten worden.

Aus dem deutschen Gebrauchsmuster DE 298 07 108.8, das für die Anmelderin der vorliegenden Anmeldung eingetragen wurde, ist bekannt, pro Fahrzeugseite eine Schwenkhebelvorrichtung vorzusehen, wobei die Schwenkhebel mit Rahmenelementen in Verbindung stehen, auf die die Getränkekästen gelagert werden können. Durch Verschwenken der Schwenkhebel können die Rahmenelemente samt den darauf gelagerten Getränkekästen neben dem Fahrzeug abgestellt werden. Nachteilig hierbei ist, daß pro Fahrzeugseite eine derartige Schwenkhebelvorrichtung vorgesehen werden muß, um eine Entladung zu beiden Seiten des Fahrzeugs sicherzustellen, da dies zu zusätzlichem Platzbedarf wie auch zusätzlichen Kosten führt.

Aus der bereits erwähnten GB-A-2 268 729 ist insbesondere eine Ladevorrichtung zum Be- und Entladen eines Fahrzeugs mit/von Bierfässern bekannt, wobei diese Vorrichtung Schienen aufweist, die sich in Längsrichtung eines Fahrzeugs erstrecken und Querschienen, die entlang der Längsschienen beweglich sind. An der beweglichen Schiene ist eine Auslegeschiene ebenfalls beweglich befestigt, wobei die Auslegeschiene dergestalt in Stellung gebracht werden kann, daß sie sowohl rechts als auch links aus dem Fahrzeug hinausragt. An dieser Auslegeschiene ist ein Kran in Längsrichtung der Auslegeschiene beweglich befestigt. An dem Kran ist ein Seil befestigt, an dessen anderem Ende eine Schlinge montiert ist, die mittig um Bierfässer zu legen ist, um diese zu transportieren.

Aus der US 1,289,604 ist eine Ladevorrichtung bekannt, die über eine Ladegabel verfügt, welche über ein Kabel mit einer Hebevorrichtung verbunden ist, die sowohl quer zum Fahrzeug, als auch in Fahrzeuglängsrichtung bewegt werden kann. Bei dieser Ladevorrichtung ist eine Entladung eines Fahrzeugs nur zu einer Fahrzeugseite möglich, ferner ist ein Entfernen der Ladegabel vom Ladegut nach dem Aufsetzen auf dem Untergrund ungünstig, da dafür weiterer Platz in Fahrzeugquerrichtung erforderlich ist. Überdies muß die Bedienperson zum Entfernen der Ladegabel vom Ladegut selbst Hand anlegen, d. h. eine Steuerung aus sicherer Entfernung vom Ladegut ist nicht möglich.

Aus der AT 385 900, siehe die dortige Figur 5, ist weiterhin bekannt, zunächst zum Entladen eines Ladeguts dieses quer zur Fahrzeuglängsachse aus dem Fahrzeug herauszuschieben und anschließend mittels eines Höhenverstellantriebs abzusenken. Auch bei dieser Ladevorrichtung muß ein entsprechender Mechanismus pro Fahrzeugseite vorgesehen werden, um eine Entladung zu beiden Längsseiten des Fahrzeugs zu ermöglichen.

Aus.der DE 33 04 974 ist eine Vorrichtung zum Entladen eines Fahrzeugs bekannt, bei der Kolbenstangen sowohl zum Verschwenken des Ladeguts, als auch zum Absenken des Ladeguts Anwendung finden. Um auf beiden Fahrzeuglängsseiten abladen zu können, muß eine derartige Vorrichtung pro Fahrzeuglängsseite vorgesehen werden.

In der DE 23 28 440 ist eine Ladevorrichtung beschrieben, mit der zwar ein Entladen auf beiden Fahrzeuglängsseiten möglich ist. Hierfür ist die Ladevorrichtung auf Schienen an der Außenseite des Fahrzeugs um das Fahrzeug herumführbar. Diese Ladevorrichtung ermöglicht jedoch aufgrund der Lagerung der Plattform, auf der das Ladegut abzustellen ist, nur das Laden relativ geringer Gewichte. Überdies besteht die Gefahr, daß bei ungleichmäßiger Lastverteilung auf der Plattform die Plattform aus ihrer horizontalen Lage ausgelenkt wird, und dabei das Ladegut von der Plattform abrutscht. Ein weiterer bedeutender Nachteil liegt darin, daß das Ladegut von Hand, d. h. von einer Bedienperson, auf der Plattform abgestellt werden bzw. von dieser wieder entfernt werden muß.

Aus der DE 37 23 794 ist eine Ladevorrichtung bekannt, die in einer separaten Ladestation angeordnet ist. Diese Ladevorrichtung ermöglicht Horizontal- und Vertikalbewegungen.

Aus der DE 44 27 468 wird eine aus zwei Kränen bestehende Krananlage, die auf einem Fahrzeug aufgebaut ist, beschrieben. Bei einem Ladevorgang sind jeweils beide Kräne gleichermaßen beteiligt, wobei diese Erfindung ein Aufheben sowie seitliches Absetzen einer Last ermöglicht. Eine Bewegung in Fahrzeuglängsrichtung ist jedoch nicht möglich.

Die DE 22 30 114 beschreibt eine Vorrichtung zum Beladen gedeckter Eisenbahnwagen und umfaßt ein selbstfahrendes Laufgestell.

Aus der DE 195 03 199 ist eine Vorrichtung zum seitlichen Be- und Entladen von Fahrzeugen bekannt, die jedoch nicht auf dem Fahrzeug selbst untergebracht ist, sondern seitlich davon auf einem sogenannten Verschiebewagenfahrwerk.

Aus der DE 42 16 709 ist eine Ladevorrichtung nach dem Oberbegriff von Anspruch 1 bekannt. Diese Ladevorrichtung ist jedoch im wesentlichen nur zum Be- und Entladen von Fahrzeugen geeignet, die auf einer ebenen Oberfläche stehen. Bei Schiefstellung des Fahrzeugs, beispielsweise, wenn an einem Hang entladen werden muß, ist diese Ladevorrichtung entweder überhaupt nicht einsetzbar oder, sofern sie eingesetzt wird, besteht die Gefahr, daß Ladegut von der Lastgabel herunterrutscht. Auch kann nach dem Absetzen ein Ausfahren der Ladegabel infolge der Schiefstellung des Fahrzeugs unmöglich sein.

Es besteht deshalb die Aufgabe, eine gattungsgemäße Ladevorrichtung derart weiterzubilden, daß ein Be- und Entladen zu beiden Längsseiten eines Fahrzeugs auch dann ermöglicht wird, wenn das Fahrzeug sich in Schiefstellung, beispielsweise an einem Hang befindet.

Die erfindungsgemäße Lösung dieser Aufgabe erfolgt durch eine Ladevorrichtung mit den Merkmalen von Anspruch 1.

Dadurch, daß die Vertikalbewegungsvorrichtung zur Verbindung mit der Last oder einer Lastgabel, die die Last trägt, einen schwenkbaren Abschnitt aufweist, der vorzugsweise mindestens ein Bandelement, beispielsweise ein Kabel, ein Seil, eine Kette, umfaßt, wird sichergestellt, daß trotz Fahrzeugneigung die Last vertikal bewegt und eben auf dem Untergrund aufgesetzt wird. Hierdurch erübrigen sich Fahrzeugabstützungen.

Die erfindungsgemäße Ladevorrichtung ermöglicht ferner, daß die Ladevorrichtung nur eine begrenzte Erstreckung, bei Getränketransportfahrzeugen vorzugsweise die Breite einer Getränkepalette, in Fahrzeuglängsrichtung zu haben braucht, da sie durch die dritte Horizontalbewegungsvorrichtung entlang der Längsrichtung eines Fahrzeugs an den gewünschten Ort verschiebbar ist. Hierdurch ergibt sich ein nur geringer Platzbedarf für die erfindungsgemäße Ladevorrichtung.

Die erfindungsgemäße Lösung ermöglicht weiterhin, daß eine Bedienperson die gesamten Steuervorgänge von der Last entfernt über ein Steuerpult kontrollieren kann, da sämtliche Bewegungen von Motoren ausgeführt werden können, die man selbstverständlich über Fernbedienungen steuern kann. Vor einem aus welchen Gründen auch immer umstürzenden Ladegut wäre die Bedienperson sicher.

Vorzugsweise unter Verwendung einer Lastgabel wird das vorzugsweise auf einer Palette gelagerte Ladegut aufgenommen, weshalb Krafteinsatz einer Bedienperson nicht erforderlich ist. Praktische Versuche haben gezeigt, daß für den vorzugsweise elektrischen Antrieb die Fahrzeugbatterie ausreicht, d. h. der Fahrzeugmotor muß für den Be- und Entladevorgang nicht mitlaufen, was zu einer günstigen Energiebilanz führt.

Dadurch daß zwei Horizontalbewegungsvorrichtungen vorgesehen sind, kann zum Entladen auf der anderen Fahrzeuglängsseite die erste Lagerung zusammen mit der Vertikalbewegungsvorrichtung und der Drehvorrichtung quer durch das Fahrzeug hindurchbewegt werden und anschließend die Kombination aus Vertikalbewegungs- und Drehvorrichtung entlang der ersten Lagerung zur gegenüberliegenden Seite der ersten Lagerung bewegt werden.

Bei einer weiteren vorteilhaften Ausführungsform umfaßt die Vertikalbewegungsvorrichtung einen Motor mit doppelseitiger Abtriebswelle. Dies ermöglicht, daß auf jeder Abtriebswelle eine Bandelementtrommel befestigt ist, wobei an jeder Bandelementtrommel zwei Bandelemente befestigt sein können, wovon jeweils ein erstes Bandelement direkt an der Last oder Lastgabel und jeweils ein zweites Bandelement über eine Umlenkrolle an der Last oder der Lastgabel befestigt sind. Hierdurch ergeben sich vier Haltepunkte für die Last bzw. die Lastgabel, was vorzugsweise in Verbindung mit Kraftausgleichsvorrichtungen für eine horizontale Ausrichtung der Lastgabel bzw. des Ladeguts sorgt.

Die vorliegende Erfindung betrifft auch ein Fahrzeug mit einer derartigen Ladevorrichtung, wobei die erste horizontale Richtung die Fahrzeugquerrichtung, und die zweite horizontale Richtung die Fahrzeuglängsrichtung ist, wobei der Bewegungsbereich der Horizontalbewegungsvorrichtungen in der ersten horizontalen Richtung so ausgelegt ist, daß die Kombination aus Vertikalbewegungs- und Drehvorrichtung so weit seitlich über beide Fahrzeugseiten hinaus bewegbar ist, daß sie in dieser Stellung, zusammen mit der Last, um die vertikale Achse gedreht werden können.

Weitere vorteilhafte Ausführungsformen können den Unteransprüchen entnommen werden. Im folgenden wird ein Ausführungsbeispiel unter Hinweis auf die beigefügten Zeichnungen näher beschrieben. Es stellen dar:
- Figur 1: eine schematische Draufsicht auf einen LKW, in dem eine erfindungsgemäße Ladevorrichtung montiert ist, wobei sich die Vertikalbewegungsvorrichtung in einer ersten Stellung befindet;
- Figur 2: eine schematische Draufsicht auf den LKW gemäß Figur 1, wobei sich die Vertikalbewegungsvorrichtung in einer zweiten Stellung befindet;
- Figur 3: in Draufsicht eine teilweise geschnittene Darstellung der erfindungsgemäßen Ladevorrichtung;
- Figur 4: eine schematische Querschnittsansicht durch einen LKW, in dem eine erfindungsgemäße Ladevorrichtung montiert ist, wobei sich die Ladevorrichtung in einer Stellung befindet, die ein Be- und Entladen auf der rechten Fahrzeugseite ermöglicht;
- Figur 5: eine schematische Querschnittsansicht durch einen LKW, in dem eine erfindungsgemäße Ladevorrichtung montiert ist, wobei sich die Ladevorrichtung in einer Stellung befindet, die ein Be- und Entladen auf der linken Fahrzeugseite ermöglicht;
- Figur 6: eine schematische, teileweise geschnittene Darstellung in Frontansicht der erfindungsgemäßen Ladevorrichtung;
- Figur 7: eine Draufsicht in vergrößerter Darstellung auf die Drehvorrichtung und Vertikalbewegungsvorrichtung.

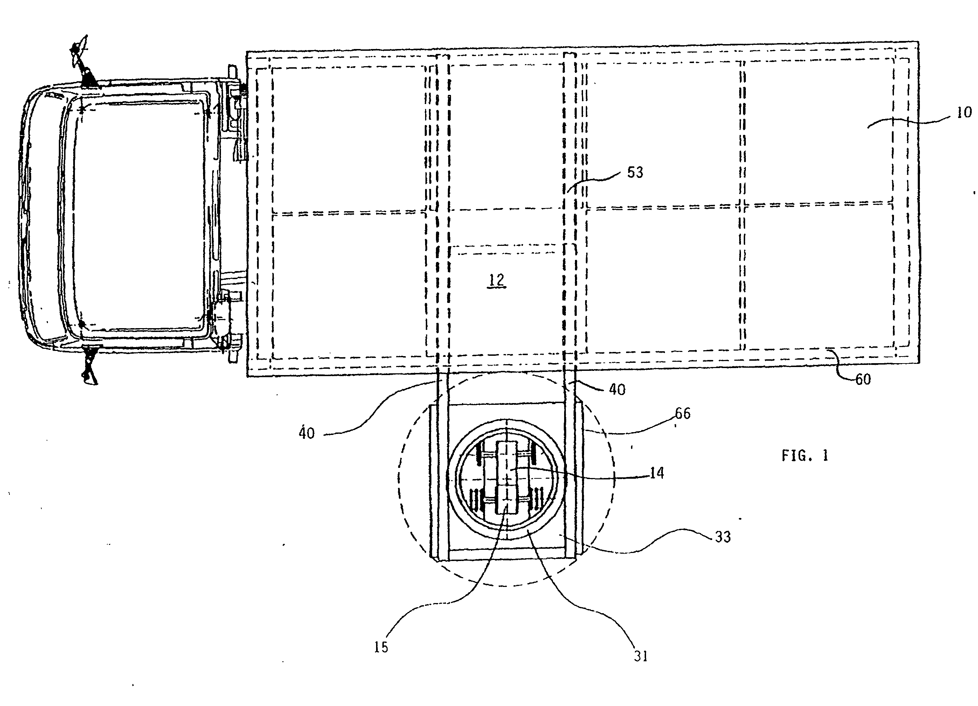

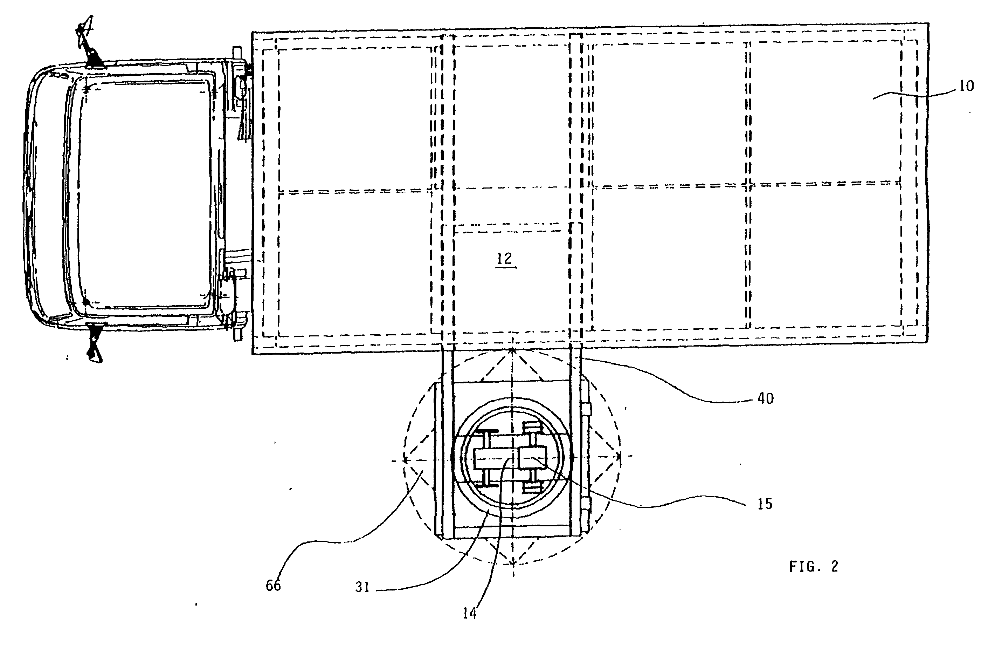

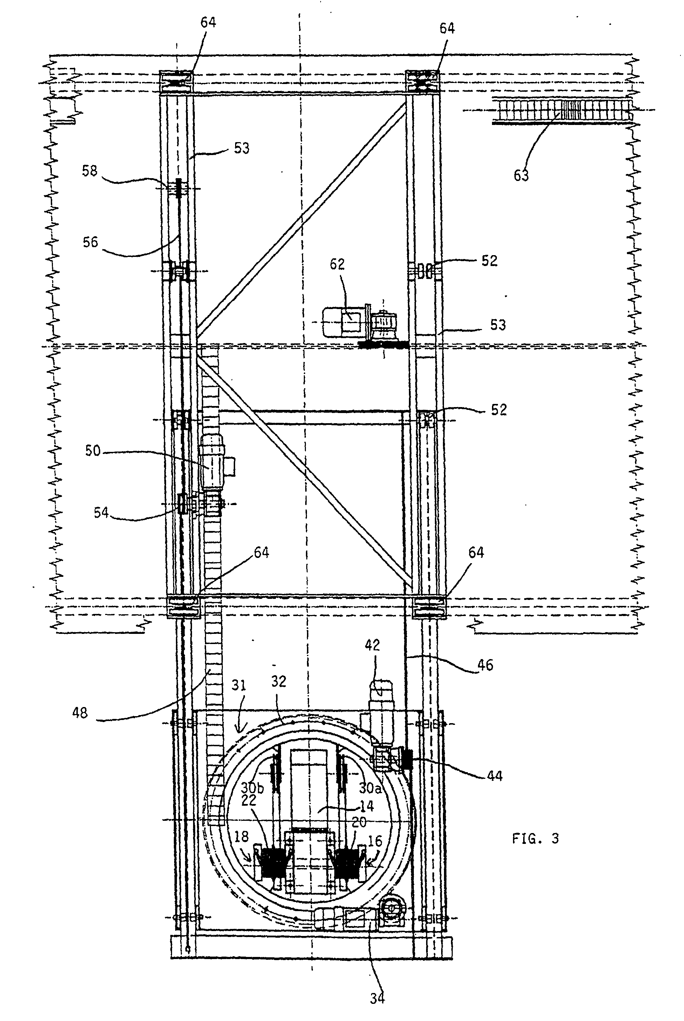

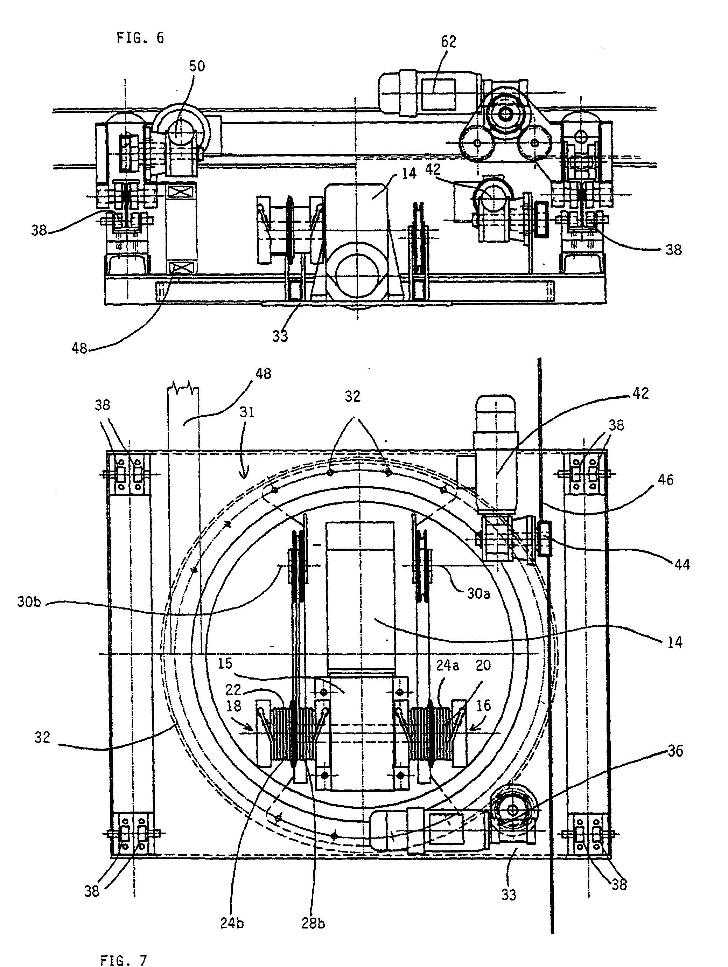

Figur 1 zeigt einen LKW 10, beispielsweise ein Getränketransportfahrzeug, in dem eine erfindungsgemäße Ladevorrichtung 12 montiert ist, wobei sich eine Vertikalbewegungsvorrichtung 14 zum Heben und Absenken des Ladeguts in einer ersten Stellung befindet. Figur 2 zeigt die entsprechende Darstellung mit der Vertikalbewegungsvorrichtung 14 in einer zweiten Stellung, wobei eine Übergangsstellung strichliert eingezeichnet ist. Eine detailliertere Darstellung der erfindungsgemäßen Ladevorrichtung kann den Figuren 3, 5, 6 und 7 entnommen werden, auf die die nachfolgende Beschreibung Bezug nimmt.

Die Vertikalbewegungsvorrichtung 14 umfaßt einen Motor 15 mit doppelseitiger Abtriebswelle, d. h. eine Abtriebswelle 16 auf der einen Seite des Motors 15 sowie eine zweite Abtriebswelle 18 auf der anderen Seite des Motors 15. Auf beiden Wellenenden ist jeweils eine Seiltrommel 20 bzw. 22 montiert, wobei an jeder Seiltrommel zwei Seile befestigt sind. Eines der Seile 24a bzw. 24b ist jeweils direkt mit einer Lastgabel 26 verbunden, das jeweils andere Seil 28a bzw. 28b wird zusätzlich über eine Umlenkrolle 30a bzw. 30b gelenkt. Damit ergeben sich für die Lastgabel 26 vier Haltepunkte.

Zur Drehung der Vertikalbewegungsvorrichtung 14 ist eine Drehvorrichtung 31 vorgesehen, die eine Kugeldrehverbindung 32 umfaßt. Auf einer Lagertraverse 33 ist ein Schwenkgetriebemotor 36 zum Drehen der Drehvorrichtung 31 mitsamt der Vertikalbewegungsvorrichtung 14 vorgesehen. Die Größenverhältnisse zwischen Kugeldrehverbindung 32 und Vertikalbewegungsvorrichtung 14 sind so ausgelegt, daß die Vertikalbewegungsvorrichtung 14 innerhalb des Durchmessers der Kugeldrehverbindung 32 Platz findet. Dies ermöglicht ein ungehindertes Drehen der Drehvorrichtung 31 mitsamt der Vertikalbewegungsvorrichtung 14. An den vier Eckpunkten der Lagertraverse 33 sind Rollenpaare 38 vorgesehen, die ein Verschieben der Kombination aus Vertikalbewegungsvorrichtung 14 und Drehvorrichtung 31, im nachfolgenden als Hubschlitten bezeichnet, in horizontaler Richtung, d. h. in Richtung der Fahrzeugquerseite, entlang zweier Querschienen 40 ermöglichen. Hierbei werden vorzugsweise Doppel-T-Träger verwendet. Ein Motor 42, der mit einem mehrfach um eine Seiltriebscheibe 44 gewickelten Seil 46 verbunden ist, ermöglicht die Bewegung des Hubschlittens entlang der Querschienen 40. Die Energieversorgung des Motors 14 sowie der Motoren 36 und 42 erfolgt über eine Energiekette 48. Die Querschienen 40 sind ihrerseits durch einen Motor 50 über Lagerrollenpaare 52 entlang von Querträgern 53 verschiebbar. Hierzu ist der Motor 50 mit einer Seiltriebscheibe 54, einem Seil 56 sowie einer versetzten Umlenkrolle 58 verbunden. Durch diese Anordnung wird das Querverfahren des Hubschlittens nach beiden Fahrzeugseiten ermöglicht. Zwei Längsträger 60 ermöglichen die Verschiebung der gesamten Querbewegungsvorrichtung, d.h. der Kombination aus Hubschlitten, Querschienen 40 und Querträgern 53, in Fahrzeuglängsrichtung. Hierzu ist ein Motor 62 mit einer Seiltriebscheibe oder einem Kettensystem vorgesehen. Der Motor 62 kann wahlweise an der Querbewegungsvorrichtung oder am Aufbau des LKW befestigt sein. Im Falle der Befestigung des Motors 62 an der Querbewegungsvorrichtung ist zur Stromversorgung eine Energiekette 63 vorgesehen. Zur Lagerung der Querbewegungsvorrichtung an den Längsträgern 60 dienen Lagerrollenpaare 64.

Alle Antriebsmotoren, die oben erwähnt wurden, sind mit Rutschkupplungen gegen Überlast, zum Beispiel bei Anstoß der Last bzw. der Lastgabel an ein Hindernis, ausgerüstet. Die Hebeeinrichtung enthält überdies elektrische Sicherheitseinrichtungen, die eine Entlastung beim Aufsetzen der Last oder der Lastgabel auf einem Untergrund erkennen, beispielsweise durch Erkennen eines Schlaffseilzustandes, und als Folge die Vertikalbewegungsvorrichtung stoppen.

Die Drehvorrichtung wird über Endschalter kontrolliert und kann nur in der Endposition des Hubschlittens auf den Querschienen 40 betätigt werden. Dies bedeutet, daß im Normalbetrieb, d. h. beim Entladen zu einer Fahrzeugseite, der Hubschlitten relativ zu den Querschienen 40 fix positioniert ist, und die entsprechenden Querbewegungen durch Verschieben der Kombination aus Hubschlitten und Querschienen 40, im folgenden Querverfahreinheit genannt, entlang der Querträger 53 erfolgt.

Durch die Verbindung der Vertikalbewegungsvorrichtung mit der Last bzw. der Lastgabel über, wie dargestellt, ein Vierfach-Seilsystem, oder allgemein über ein Mehrfach-Seilsystem, kann eine Bewegung der Lastgabel bzw. des Ladegutes in horizontaler Ausrichtung sichergestellt werden. Da das Lastgut beispielsweise aus Getränkekästen bestehen kann, die nicht zwangsläufig gleiches Gewicht haben, d. h. eine Palettenbeladung teilweise aus vollgefüllten oder leeren Getränkekästen bestehen kann, ist zur Vermeidung einer Schiefstellung der Palette vorzugsweise eine Vierfach-Seilverbindung zwischen Vertikalbewegungsvorrichtung und Last bzw. Lastgabel vorgesehen. Um ein Kippen zu vermeiden, muß sich der veränderte Schwerpunkt innerhalb der Seilbefestigungspunkte befinden.

Für die Be- und Entladung auf einem leicht geneigten Untergrund ergibt sich außerdem der Vorteil, daß die Lastgabel über die Seile wie ein Parallelogramm aufgehängt ist.

Zur Funktion der erfindungsgemäßen Ladevorrichtung: Beim Entladen befindet sich die Lastgabel 26 zunächst innerhalb einer Palette, auf der sich Ladegut befindet. Mit der Vertikalbewegungsvorrichtung 14 wird die Lastgabel 26 circa 5 Zentimeter bis zu einem oberen Abschaltpunkt angehoben. Der Hubschlitten wird zusammen mit den Querschienen 40 um circa 90 Zentimeter quer zum Fahrzeug herausgefahren. Bevor die Lastgabel 26 mit dem Ladegut seitlich neben dem Fahrzeug abgesenkt werden kann, muß die Lastgabel 26 mit der Drehvorrichtung um 90° gedreht werden. Dies ist erforderlich, um die Lastgabel 26 nach dem Absetzen der Last aus der Palette entfernen zu können. Anschließend wird das Ladegut seitlich vom Fahrzeug auf den Boden gesetzt, wobei eine Abschaltvorrichtung die Absenkbewegung automatisch abschaltet, wenn das Eigengewicht der Lastgabel 26 die Vertikalbewegungsvorrichtung entlastet. Die Lastgabel 26 kann nun in Fahrzeugrichtung durch Verfahren der Querverfahreinheit zusammen mit den Querträgern 53 entlang der Fahrzeuglängsachse aus der Palette entfernt werden.

Der Beladevorgang erfolgt in umgekehrter Reihenfolge. Zum Be- und Entladen des Ladeguts auf der anderen Fahrzeugseite gibt es zwei Möglichkeiten:

Soll die Be- bzw. Entladung auf derselben Seite stattfinden, so wird zunächst die vordere Palette entladen und anschließend die sich dahinter befindende Palette zur gleichen Seite durchgeladen.

Für den Fall, daß sich die Lastgabel zunächst auf der linken Fahrzeugseite befindet, die nachfolgende Entladung jedoch auf der rechten Fahrzeugseite stattfinden soll, wird zunächst die linksseitig befindliche Palette, wie oben beschrieben, ausgeladen, die dahinter, d.h. auf der rechten Fahrzeugseite befindliche Palette mit der Lastgabel 26 aufgenommen und durch Bewegen des Hubschlittens entlang der Querschienen 40 sowie der Querschienen 40 entlang der Querträger 54 über die rechte Seite ausgeladen. Über die nunmehr freie Ladefläche kann die gesamte Kombination wieder nach links durchgefahren werden, um die linksseitige Palette auf die Ladefläche zurückzuladen. Die Lastgabel befindet sich nun auf der rechten Fahrzeugseite und kann hier für das weitere Be- und Entladen eingesetzt werden.

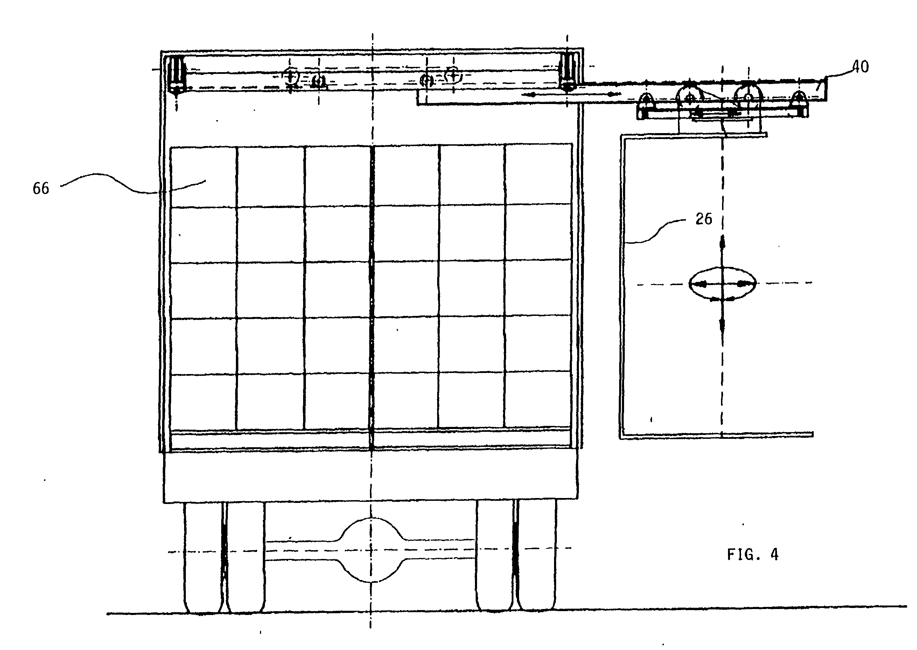

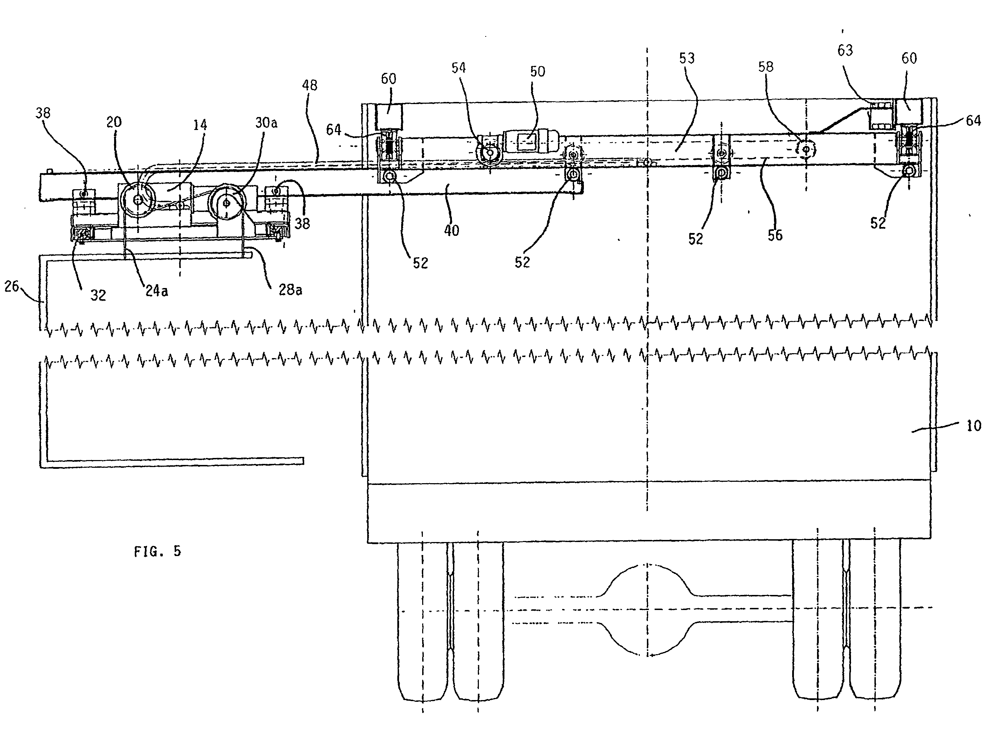

Während Fig. 5 die Stellung der Ladevorrichtung für linksseitiges Be- und Entladen darstellt, ist in Fig. 4 die Stellung der Ladevorrichtung für rechtsseitiges Be- und Entladen dargestellt, wobei hier das Entladegut mit der Bezugsziffer 66 bezeichnet ist.

Für den Fachmann ist selbstverständlich, daß unter Anwendung des erfinderischen Gedankens modifizierte Ausführungsformen möglich sind. Beispielsweise können Lastkörbe oder -käfige zur Aufnahme der Last verwendet werden, die beispielsweise nur über eine zentral angeordnete Transportöse verfügen. Zum Transport derartiger Körbe bzw. Käfige genügt es dann, wenn die Vertikalbewegungsvorrichtung lediglich ein Seil bedient, das mit einer derartigen Öse verbunden ist.

Bei geringeren Lasten kann der Hubschlitten an einer einzelnen Querschiene anstelle von zwei Querschienen gelagert sein. Entsprechendes gilt für die Ausbildung der Querträger und Längsträger.

Anstelle der in den Figuren dargestellten Variante, bei der die Vertikalbewegungsvorrichtung mehrere Seile 24A, 24B, 28A, 28B umfaßt, kann die Lagerung der Last bzw. Lastgabel auch beispielsweise durch ein einzelnes Seil erfolgen. Eine derartige Lagerung kann eine von einem Getriebemotor in beiden Richtungen antreibbare Windenrolle aufweisen, von der ein Seil über eine Umlenkrolle und gegebenenfalls eine Flaschenrolle mit einem Festpunkt verbunden ist.

## Patentansprüche

1. In ein Fahrzeug einbaubare Ladevorrichtung zum Be- und Entladen des Fahrzeugs umfassend
- eine Vertikalbewegungsvorrichtung (14), mit der eine Last verbindbar ist, zum vertikalen Bewegen der Last, wobei die Vertikalbewegungsvorrichtung (14) einen gegenüber der Fahrzeughochachse schwenkbaren, mit der Last oder einer Lastgabel (26), die die Last trägt, verbindbaren Abschnitt aufweist,
- eine erste Horizontalbewegungsvorrichtung (42) zum linearen Bewegen zumindest der Vertikalbewegungsvorrichtung (14) entlang einer ersten Lagerung (40), die in einer ersten horizontalen Richtung verlä uft,
- eine zweite Horizontalbewegungsvorrichtung (50) zum Bewegen zumindest der Kombination aus erster Lagerung (40) und Vertikalbewegungsvorrichtung (14) entlang einer zweiten Lagerung (53), die in der ersten horizontalen Richtung verläuft,
- eine dritte Horizontalbewegungsvorrichtung (62) zum Bewegen zumindest der Kombination aus erster (40) und zweiter Lagerung (53) und Vertikalbewegungsvorrichtung (14) entlang einer zweiten horizontalen Richtung, die im wesentlichen orthogonal zur ersten horizontalen Richtung verläuft,
**dadurch gekennzeichnet,**
**dass** die Ladevorrichtung weiterhin eine Drehvorrichtung (31) zum Drehen der Vertikalbewegungsvorrichtung (14) um eine vertikale Achse umfaßt, wobei die erste Horizontalbewegungsvorrichtung (42) ausgelegt ist, die Kombination aus Vertikalbewegungs- (14) und Drehvorrichtung (31) zu bewegen, wobei die zweite Horizontalbewegungsvorrichtung (50) ausgelegt ist, die Kombination aus erster Lagerung (40), Vertikalbewegungs- (14) und Drehvorrichtung (31) zu bewegen, und wobei die dritte Horizontalbewegungsvorrichtung (62) ausgelegt ist, die Kombination aus erster (40) und zweiter Lagerung (53), Vertikalbewegungs- (14) und Drehvorrichtung (31) zu bewegen.

2. Ladevorrichtung nach Anspruch 1,
**dadurch gekennzeichnet,**
**daß** der schwenkbare Abschnitt mindestens ein Bandelement (24a; 24b), insbesondere mindestens ein Seil umfaßt.

3. Ladevorrichtung nach Anspruch 1 oder 2,
**dadurch gekennzeichnet,**
**daß** die Vertikalbewegungsvorrichtung einen Motor (15) mit zwei Abtriebswellen (16, 18) umfaßt.

4. Ladevorrichtung nach Anspruch 3,
**dadurch gekennzeichnet,**
**daß** auf jeder Abtriebswelle (16; 18) eine Bandelementtrommel (20; 22) befestigt ist, wobei an jeder Bandelementtrommel (20; 22) zwei Bandelemente (24a, 28a; 24b, 28b) befestigt sind, wovon jeweils ein erstes Bandelement (24a; 24b) direkt an der Last oder Lastgabel (26) und jeweils ein zweites Bandelement (28a; 28b) über jeweils eine Umlenkrolle (30a; 30b) an der Last oder der Lastgabel (26) befestigt sind.

5. Ladevorrichtung nach einem der vorhergehenden Ansprüche,
**dadurch gekennzeichnet,**
**daß** die Vertikalbewegungsvorrichtung (14) eine Stoppvorrichtung umfaßt, die bei einer abwärtsgerichteten Vertikalbewegung das Aufsetzen der Last oder der Lastgabel (26) auf einem Untergrund und die damit einhergehende Entlastung der Vertikalbewegungsvorrichtung (14) erkennt und daraufhin die Vertikalbewegung stoppt.

6. Ladevorrichtung nach einem der vorhergehenden Ansprüche,
**dadurch gekennzeichnet,**
**daß** die Drehvorrichtung (31) eine Kugeldrehverbindung (32) umfaßt.

7. Ladevorrichtung nach Anspruch 6,
**dadurch gekennzeichnet,**
**daß** die Vertikalbewegungsvorrichtung (14) hinsichtlich Größe und Form derart bemessen ist, daß sie um eine vertikale Achse durch das Zentrum der Kugeldrehverbindung (32) drehbar ist.

8. Ladevorrichtung nach einem der vorhergehenden Ansprüche,
**dadurch gekennzeichnet,**
**daß** die erste und/oder zweite Lagerung jeweils mindestens einen Lagerarm umfassen bzw. umfaßt.

9. Ladevorrichtung nach einem der vorhergehenden Ansprüche,
**dadurch gekennzeichnet,**
**daß** die Drehvorrichtung (31) erst dann betätigbar ist, wenn die Kombination aus Vertikalbewegungs- (14) und Drehvorrichtung (31) entlang der ersten Lagerung (40) eine vorbestimmte Position eingenommen hat.

10. Fahrzeug mit einer Ladevorrichtung nach einem der vorhergehenden Ansprüchen,
**dadurch gekennzeichnet,**
**daß** die erste horizontale Richtung die Fahrzeugquerrichtung und die zweite horizontale Richtung die Fahrzeuglängsrichtung ist, wobei der Bewegungsbereich, der von den Horizontalbewegungsvorrichtungen bedient werden kann, in der ersten horizontalen Richtung so ausgelegt ist, daß die Kombination aus Vertikalbewegungs- und Drehvorrichtung so weit seitlich über beide Fahrzeugseiten hinaus bewegbar ist, daß sie in dieser Stellung um die vertikale Achse drehbar ist, ohne am Fahrzeug anzustoßen.

## Claims

1. Loading device installable in a vehicle, for loading and unloading the vehicle, comprising
- a vertical moving device (14), to which a load is connectable, for vertically moving the load, wherein the vertical moving device (14) has a section connectable to the load or a load fork (26) supporting the load, and hinged with respect to the vehicle vertical axis,
- a first horizontal moving device (42) for linearly moving at least the vertical moving device (14) along a first support (40) running in a first horizontal direction,
- a second horizontal moving device (50) for moving at least the combination of the first support (40) and vertical moving device (14) along a second support (53) running in the first horizontal direction,
- a third horizontal moving device (62) for moving at least the combination of first (40) and second support (53) and vertical moving device (14) along a second horizontal direction running substantially orthogonal to the first horizontal direction,
**characterized in that**
the loading device further includes a rotating device (31 ) for rotating the vertical moving device (14) about a vertical axis, wherein the first horizontal moving device (42) is adapted to move the combination of vertical moving (14) and rotating device (31), wherein the second horizontal moving device (50) is adapted to move the combination of first support (40), vertical moving (14) and rotating device (31), and wherein the third horizontal moving device (62) is adapted to move the combination of first (40) and second support (53), vertical moving (14) and rotating device (31).

2. Loading device according to claim 1,
**characterized in that**
the hinged section includes at least one belt member (24a; 24b), especially at least one rope.

3. Loading device according to claim 1 or 2,
**characterized in that**
the vertical moving device includes a motor (15) with two output shafts (16, 18).

4. Loading device according to claim 3,
**characterized in that**
a belt member drum (20; 22) is attached to each output shaft (16; 18), wherein two belt members (24a, 28a; 24b, 28b) are attached to each belt member drum (20; 22), of which a first belt member (24a; 24b) is respectively directly secured to the load or load fork (26), and a second belt member (28a; 28b) is respectively secured to the load or the load fork (26) via a guide roller (30a; 30b), respectively.

5. Loading device according to any one of the preceding claims,
**characterized in that**
the vertical moving device (14) includes a stopping device, which detects touching ground of the load or the load fork (26) in downward vertical movement and inherent unloading the vertical moving device (14) and thereupon stops the vertical movement.

6. Loading device according to any one of the preceding claims,
**characterized in that**
the rotating device (31) includes a ball bearing slewing gear (32).

7. Loading device according to claim 6,
**characterized in that**
the vertical moving device (14) is dimensioned in size and shape such that it is rotatable about a vertical axis through the center of the ball bearing slewing gear (32).

8. Loading device according to any one of the preceding claims,
**characterized in that**
the first and/or the second support each include(s) at least one supporting arm.

9. Loading device according to any one of the preceding claims,
**characterized in that**
the rotating device (31) is only able to be actuated when the combination of vertical moving (14) and rotating device (31) has occupied a certain position along the first support (40).

10. Vehicle including a loading device according to any one of the preceding claims,
**characterized in that**
the first horizontal direction is the vehicle transverse direction, and the second horizontal direction is the vehicle longitudinal direction, wherein the range of movement, which can be served by the horizontal moving devices, is adapted in the first horizontal direction such that the combination of vertical moving and rotating device is movable laterally beyond both vehicle sides so far that it is rotatable about the vertical axis in this position, without hitting the vehicle.

## Revendications

1. Dispositif de chargement et de déchargement pouvant être intégré dans un véhicule, comprenant
- un dispositif de déplacement vertical (14) permettant la fixation d'une charge, destiné au déplacement vertical de la charge, le dispositif de déplacement vertical (14) présentant une section orientable par rapport à l'axe vertical du véhicule, pouvant être reliée à la charge ou à une fourche (26) supportant la charge,
- un premier dispositif de déplacement horizontal (42) prévu pour le déplacement linéaire d'au moins du dispositif de déplacement vertical (14) le long d'un premier palier (40) situé dans une première direction horizontale
- un deuxième dispositif de déplacement horizontal (50) prévu pour le déplacement d'au moins la combinaison formée par le premier palier (40) et le dispositif de déplacement vertical (14) le long d'un deuxième palier (53) situé dans la première direction horizontale,
- un troisième dispositif de déplacement horizontal (62) prévu pour le déplacement d'au moins la combinaison formée par les premier (40) et deuxième (53) paliers et le dispositif de déplacement vertical (14) le long d'une deuxième direction horizontale sensiblement orthogonale à la première direction horizontale,
**caractérisé en ce que**
le dispositif de chargement comprend par ailleurs un dispositif de rotation (31) prévu pour la rotation du dispositif de déplacement vertical (14) autour d'un axe vertical, le premier dispositif de déplacement horizontal (42) étant dimensionné de manière à permettre le déplacement de la combinaison formée par le dispositif de déplacement vertical (14) et le dispositif de rotation (31), le deuxième de déplacement horizontal (50) étant dimensionné de manière à permettre le déplacement de la combinaison formée par le premier palier (40), les dispositifs de déplacement vertical (14) et de rotation (31) et le troisième dispositif de déplacement horizontal (62) étant dimensionné de manière à permettre le déplacement de la combinaison formée par les premier (40) et deuxième (53) paliers et les dispositifs de déplacement vertical (14) et de rotation (31).

2. Dispositif de chargement selon la revendication 1, **caractérisé en ce que** la section orientable comprend au moins un élément de bande (24a; 24b), notamment au moins un câble.

3. Dispositif selon la revendication 1 ou 2, **caractérisé en ce que** le dispositif de déplacement vertical comprend un moteur (15) muni de deux arbres de sortie (16,18).

4. Dispositif de chargement selon la revendication 3, **caractérisé en ce que** sur chaque élément de bande (16 ;18) est fixé un tambour à éléments de bande (20 ; 22), sur chaque tambour à éléments de bande (20 ; 22) étant fixés au moins deux éléments de bande (24a, 26a, 24b, 28b) dont un premier élément de bande (24a,24b) est fixé directement sur la charge ou la fourche (26) et un deuxième élément de bande (28a, 28b) est fixé, par l'intermédiaire d'une poulie de renvoi (30a, 30b), sur la charge ou la fourche (26).

5. Dispositif de chargement selon l'une des revendications précédentes, **caractérisé en ce que** le dispositif de déplacement vertical (14) comprend un dispositif d'arrêt qui, lors d'un déplacement vertical dirigé vers le bas, détecte la mise en place de la charge ou de la fourche (26) sur un fond ainsi que la décharge y afférente du dispositif de déplacement vertical (14) et arrête le déplacement vertical.

6. Dispositif de chargement selon l'une des revendications précédentes, **caractérisé en ce que** le dispositif de rotation (31) comprend une couronne pivotante à billes (32).

7. Dispositif de chargement selon la revendication 6, **caractérisé en ce que** la taille et la forme du dispositif de déplacement vertical (14) ont été conçus de manière à permettre sa rotation autour d'un axe vertical à travers le centre de la couronne pivotante à billes (32).

8. Dispositif de chargement selon l'une des revendications précédentes, **caractérisé en ce que** les premier et/ou deuxième palier comporte/nt au moins un bras d'appui.

9. Dispositif selon l'une des revendications précédentes, **caractérisé en ce que** le dispositif de rotation (31) ne peut être actionné que lorsque la combinaison formée par les dispositifs de déplacement vertical (14) et de rotation (31) le long du premier palier (40) occupe une position prédéterminée.

10. Véhicule muni d'un dispositif de chargement selon l'une des revendications précédentes, **caractérisé en ce que** la première direction horizontale est la direction transversale du véhicule et la deuxième direction horizontale la direction longitudinale du véhicule ; la zone d'action susceptible d'être desservie par les dispositifs de déplacement horizontal étant dimensionnée dans la première direction horizontale de manière à ce que la combinaison formée par les dispositifs de déplacement vertical et de rotation puisse être déplacée latéralement en dépassant les deux côtés du véhicule, que dans cette position, elle puisse tourner autour de l'axe vertical sans buter contre le véhicule.
